## Europäisches Patentamt
## European Patent Office
## Office européen des brevets

(11) Veröffentlichungsnummer: **0 010 714**
A1

(12)

# EUROPÄISCHE PATENTANMELDUNG

(21) Anmeldenummer: 79104080.1

(22) Anmeldetag: 22.10.79

(51) Int. Cl.³: **C 09 K 3/28,** C 09 D 5/18, **C 08 J 9/00**

(30) Priorität: 04.11.78 DE 2847923

(43) Veröffentlichungstag der Anmeldung: 14.05.80
Patentblatt 80/10

(84) Benannte Vertragsstaaten: **AT DE FR GB IT NL SE**

(71) Anmelder: **BAYER Aktiengesellschaft, Zentralbereich Patente,Marken und Lizenzen Bayerwerk, D-5090 Leverkusen 1 (DE)**

(72) Erfinder: **Von Bonin, Wulf, Dr., Mendelssohnstrasse 30, D-5090 Leverkusen 1 (DE)**

(54) **Flammwidrige schäumbare Formmassen, Verfahren zu ihrer Herstellung und ihre Verwendung.**

(57) Formmassen auf Basis von Intumeszenzmitteln und kugeligen oder nahezu kugeligen Füllstoffen zeigen bei höherer Temperatur, z.B. im Brandfall, eine stark verringerte Tropfneigung und ungemindertes Schäumvermögen. Diese Formmassen werden durch miteinander Mischen von Intumeszenzmitteln und Füllstoffen hergestellt und als Kitte, Füllmassen, Überzugsmittel oder zur Herstellung geschäumter Formkörper verwendet.

EP 0 010 714 A1

ACTORUM AG

- 1 -

BAYER AKTIENGESELLSCHAFT          5090 Leverkusen, Bayerwerk
Zentralbereich
Patente, Marken und Lizenzen      Pv/W/VS

2. Nov. 1978

**Flammwidrige schäumbare Formmassen, Verfahren zu ihrer Herstellung und ihre Verwendung**

Die vorliegende Erfindung betrifft flammwidrige schäumbare Formmassen, die aus einem Intumeszenzmittel und kugelförmigen oder nahezu kugelförmigen Füllstoffen bestehen, ein Verfahren zu ihrer Herstellung und ihre Verwendung als Kitte, Füllmassen, Überzugsmittel und zur Herstellung geschäumter Formkörper.

Unter Intumeszenzmittel im Sinne der Erfindung sollen solche Stoffe verstanden werden, die bei Temperaturen bis zu 150°C nicht schäumen, aber bei höheren Temperaturen, vorzugsweise über 180° C, Blasen bilden, aufschäumen und einen vielzelligen isolierenden Schaum erzeugen.

Intumeszenzmittel bestehen aus

1. einem sogenannten Karbonific, d.h. einer Kohlenstoffquelle,
2. einem "Katalysator" als Borsäure- oder vorzugsweise Phosphorsäurequelle und

Le A 19 091 -Ausland

- 2 -

3. einem Treibmittel als Quelle nicht entflammbarer
   Gase.

Als (1) Karbonific können allgemein solche Stoffe verwendet werden, die in der Lage sind, das Kohlenstoffgerüst für den wärmedämmenden Schaum bereitzustellen, also z.B. Kohlenhydrate oder mehrwertige Alkohole wie Zucker, Stärke, Kasein, Pentaerythrit, Di- und Tripentaerythrit. Ein wirksames Karbonific soll eine große Anzahl mit Bor- oder Phosphorsäure veresterungsfähiger Gruppen, vorzugsweise Hydroxylgruppen, und einen hohen Gehalt an Kohlenstoffatomen besitzen.

Der "Katalysator" (2) sollte sich möglichst bei einer Temperatur, die unter der Zersetzungstemperatur des Karbonific (1) liegt, unter Bildung von möglichst viel Bor- oder Phosphorsäure zersetzen; z.B. eignet sich Ammoniumorthophosphat.

Das Treibmittel (3) setzt ein nicht entflammbares Gas frei, wobei es zur Schäumung und damit zur Bildung einer isolierenden Schicht kommt. Die Zersetzung des Treibmittels (3) sollte gleichzeitig mit der Zersetzung des aus dem Karbonific (1) und der aus dem Katalysator (2) freigesetzten Bor- bzw. Phoshorsäure entstandenen Bor- bzw. Phosphorsäureesters eintreten. Beispiele für geeignete Treibmittel sind

Le A 19 091

0010714

- 3 -

Guanylharnstoff, Dicyandiamid, Melamin und Harnstoff.

Die Wirkung von Intumeszenz-Anstrichen im Brandfall ist
möglicherweise folgende:
Sobald die Zersetzungstemperatur des Katalysators (2)
erreicht ist, wird Bor- oder Phosphorsäure freigesetzt, die sich
z.T. dann mit dem Karbonific (1) zu einem Bor- bzw. Phosphorsäureester umsetzt. Bei weiterem Temperaturanstieg setzt die
Zersetzung dieser Bor- bzw. Phosphorsäureester bei einer Temperatur ein, die gewöhnlich unterhalb der Zersetzungstemperatur des unveresterten Karbonific (1) liegt. Die
Zersetzungsprodukte bestehen im wesentlichen aus
Kohlenstoff, Wasser, Kohlenoxiden und Bor- oder Phosphorsäure,
die wiederum mit unverestertem Karbonific (1) reagieren
kann.

Gleichzeitig mit der Zersetzung des Bor- oder Phosphorsäureesters beginnt sich das Treibmittel zu zersetzen und
liefert nicht entflammbare Gase, die den Kohlenstoffhaltigen Rückstand des Bor- bzw. Phosphorsäureesters blähen und
schäumen, so daß sich eine isolierende Schicht bildet.
Durch Verwendung von mindestens zwei verschiedenen
Treibmitteln mit unterschiedlichen Zersetzungstemperaturen läßt sich die Gasentwicklung verlängern,
so daß größere Schaummengen erzeugt werden können.

Le A 19 091

- 4 -

Schäumbare Intumeszenz-Anstrichmittel sind bekannt und bestehen beispielsweise aus Gemischen von Ammoniumphosphaten, Paraformaldehyd und Harnstoff bzw. Harnstoff/Formaldehyd-Harzen oder von Zucker, Dicyanamid und Ammoniumphosphaten oder -polyphosphaten. Sie werden im allgemeinen zu Schutzlacken auf Holz oder Metall verarbeitet.

Bei Hitzeeinwirkung schmelzen Intumeszenzmittel unter Gasentwicklung auf und beginnen nach Erreichen einer ausreichend niedrigen Viskosität sich zu einem "karbonisierten", d.h. sehr Kohlenstoff-reichen, relativ flammwidrigen Schaumsystem zu verändern. Dieser Schaum brennt nur langsam ab und schützt durch seine isolierende Wirkung den Untergrund.

Der Erfindung liegt der Gedanke zugrunde, daß sich Intumeszenzmittel - entsprechend modifiziert - nicht nur für die Herstellung dünner Lachschichten, sondern - z.B. als Kitte - auch dicker Schichten eignen und daß man sogar das üblicherweise nur im Brandfall zum Tragen kommende Schäumvermögen mit Vorteil zum Herstellen geschäumten Materials ausnutzen kann.

Die bislang bekannten Intumeszenz-Anstrichmittel eignen sich zwar hervorragend zur Herstellung von Überzügen, wirken aber in der für Kitte und Füllmassen notwendigen Schichtdicke in nicht zufriedenstellender

Le A 19 091

- 5 -

Weise, weil sie - einmal erhitzt - im Stadium niedriger Viskosität leicht ablaufen und somit ihre Funktion nicht mehr erfüllen können. Beim Versuch, die Viskosität auf übliche Weise durch Zusatz von Füllstoffen wie Kreide, Kieselsäure, Talkum, Ton, Zement, Sand oder Gesteinsmehl zu erhöhen, wird das Schäumvermögen der Intumeszenzmittel drastisch vermindert, so daß sie nahezu unwirksam werden.

Zudem ist das Problem der für Kitte wünschenswerten plastischen Eigenschaften auf dem Sektor der Intumeszenzmittel noch nicht gelöst, da die herkömmlichen Intumeszenzmittel im Raumklima zu harten Massen auftrocknen. Das Einarbeiten weicher Polymerer verbietet sich von selbst, da diese erstens die Brandlast erhöhen und zweitens ebenfalls den Schäumprozeß ungünstig beeinflussen.

Es wurde nun überraschenderweise gefunden, daß man die für Kitte und Füllmassen erwünschte Viskosität im Brandfalle ohne Nachteil für das Aufschäumen dadurch erreichen kann, daß man als Füllstoffe kugelförmige oder nahezu kugelförmige Teilchen, insbesondere Hohlkugeln, vorzugsweise aus anorganischem Material, einsetzt. Man erhält auf diese Weise Kitte und Füllmassen mit stark verringerter Neigung zum Abtropfen bei höherer Temperatur.

Dauerplastische Kitte und Füllmassen lassen sich dann erhalten, wenn man den kugelhaltigen Intumeszenz-

Le A 19 091

- 6 -

massen als Karbonific (1) nicht kristallisierende zuckerähnliche Substanzen, insbesondere Formosen, oder deren Ester einverleibt.

Gegenstand der Erfindung sind also flammwidrige schäumbare Formmassen auf der Basis von Intumeszenzmitteln mit einem Gehalt an Füllstoffen, dadurch gekennzeichnet, daß die Füllstoffe kugelige oder nahezu kugelige Teilchen sind.

Ein weiterer Gegenstand der Erfindung ist ein Verfahren zur Herstellung der erfindungsgemäßen flammwidrigen schäumbaren Massen, dadurch gekennzeichnet, daß man Intumeszenzmittel und Füllstoffe sowie ggf. weitere Hilfsmittel miteinander mischt.

Ein weiterer Gegenstand der Erfindung ist die Verwendung der erfindungsgemäßen Formmassen als Kitte, Füllmassen, Überzugsmittel und zur Herstellung geschäumter Formkörper.

Als (1) Karbonific kommen nach einer besonderen Ausführungsform neben den üblicherweise verwendeten Substanzen wie Formaldehydharzen, Paraformaldehyd, Pentaerythrit, Sorbit, sonstigen Aldosen oder Ketosen und niedrigen Zuckern, wie z.B. Rohrzucker, insbesondere ggf. im Gemisch mit anderen Kohlenstoffquellen (1) nicht kristallisierende zumeist als Gemische vorliegende zuckerähnliche Verbindungen, insbesondere Formosen und/oder deren Ester, z.B. Acetate, Propionate, Formiate, Benzoate bzw. deren wäßrige Lösungen in Betracht.

Bevorzugte nicht kristallisierende zuckerähnliche Substanzen sind Honig, Melasse, sonstige durch Verkochen oder Extraktion von Zucker enthaltenden pflanzlichen Substraten erhältliche Sirupe, fermentativ hergestellte Zuckersirupe (z.B. aus Stärke hergestellt, wobei vorzugsweise solche dieser Produkte Verwendung

Le A 19 091

finden, die weitgehend von anderweitig zu verwertenden kristallinen Anteilen befreit worden sind). Andererseits sind solche nicht kristallisierenden zuckerähnlichen Substanzen auch erhältlich, indem man zur Kristallisation neigende Verbindungen durch Erhitzen, ggf. unter Zusatz von Wasser und/oder weiteren Zusatzstoffen, z.B. Phosphaten, in nicht mehr zur Kristallisation neigende Produkte überführt.

Von im Rahmen der vorliegenden Erfindung besonderer Bedeutung ist die Verwendung von Formosen und/oder Formosestern als (1) Karbonific. Formosen sind zuckerähnliche zumeist leicht hygroskopische Substanzgemische, die durch Polykondensation von Formaldehyd, meist an basischen Katalysatoren, erhältlich sind. Sie haben den Vorteil, aus der Methanolchemie gut zugänglich und besonders preiswert zu sein und mit stets gleichbleibender Qualität und gleichem Wassergehalt zur Verfügung zu stehen.

Die Kohlenstoffquellen (1) können in den erfindungsgemäßen Formmassen in Mengen von 5 - 70, vorzugsweise 10 - 50 Gew.-%, bezogen auf die Formmasse, enthalten sein.

Die in den erfindungsgemäßen flammwidrigen Formmassen enthaltenen (2) Katalysatoren sind neben Boraten insbesondere Phosphate, vor allem Ammoniumphosphate. Obgleich

Le A 19 091

prinzipiell die verschiedenen Ammoniumphosphate, z.B. Diammoniumorthophosphat, oder Triäthanolaminphosphate alle sehr gut geeignet sind, ist im Rahmen der vorliegenden Erfindung Ammoniumpolyphosphat besonders bevorzugt, weil es offenbar für eine besonders günstige Rheologie der in der Hitze entstehenden, gasenden Schmelze sorgt, d.h. günstige Bedingungen für ein effektvolles Aufschäumen der erfindungsgemäßen Formmassen herstellt.

Die erfindungsgemäßen Formmassen können 5 - 70, vorzugsweise 10 - 50 Gew.-% Katalysatoren (2), bezogen auf die Formmasse, enthalten.

Als (3) Treibmittel kommen Ammoniumcarbonat, Ammoniumcarbaminat, Ammoniumformiat, sonstige Ammoniumsalze oder Harnstoff, Biuret , Guanidin, insbesonders Dicyandiamid in Mengen von 5 - 70, vorzugsweise 10 - 50 Gew.-%, bezogen auf die Formmasse, in Betracht.

Obwohl anorganische kugelförmige Füllstoffe wegen ihrer fehlenden Brennbarkeit bevorzugt werden, kommen auch kugel- oder hohlkugelförmige Füllstoffe aus organischem Material in Betracht, z.B. aus vernetztem oder unvernetztem Polystyrol oder Polyäthylen, Phenolharz oder Polyvinylchlorid. Das Material, aus dem die kugelförmigen Teilchen bestehen, sollte wasserunlöslich sein.

Quarz- bzw. Kieselsäurekugeln, Glaskugeln, Flugaschen - kügelchen sowie vor allem Kugeln aus Alumosilikaten seien besonders erwähnt. Kugeln und Hohlkugeln dieser Art sind gut zu-

Le A 19 091

- 9 -

gänglich. Die Teilchengröße kann bis zu 800 Mikron und mehr betragen; vorzugsweise werden Teilchengrößen zwischen 5 und 500 Mikron eingesetzt.

Die kugeligen Füllstoffteilchen können in Verbindung mit nicht kugeligen Füllstoffen oder auch in Verbindung mit organischen oder anorganischen Fasern Verwendung finden. Vorzugsweise werden sie jedoch als alleiniger Füllstoff verwendet.

Die kugelförmigen bzw. nahezu kugelförmigen Füllstoffe können in Mengen von 1 - 80, vorzugsweise 20 - 70, Gew.-%, bezogen auf die erfindungsgemäße Formmasse, verwendet werden.

Den erfindungsgemäßen Formmassen können neben im allgemeinen unter 10 Gew.-% liegenden Mengen an Wasser auch noch Farbpigmente, Schmiermittel, Geruchsstoffe, Hydrophobierungs- und Konservierungsmittel beigefügt werden.

Auch ist der Zusatz weiterer Füllstoffe zur Erzielung besonderer Effekte, wie Elastizität oder Gewichtsreduzierung, wie sie z.B. durch Zusätze von Schaumstoffperlen aus Polyolefinen, Polyurethanen oder Polystyrol erzielbar sind, möglich. Die Herstellung der erfindungsgemäßen Formmassen geschieht am einfachsten durch Vermischen der Komponenten in Misch- oder Knetaggregaten.

Le A 19 091

- 10 -

Oft ist es auch sinnvoll, zunächst die eigentliche schäumfähige Mischung, ggf. unter Wasserzusatz, herzustellen und dann den Füllstoff und ggf. weitere Hilfsmittel zuzumischen.

Die erfindungsgemäßen Formmassen stellen vorzugsweise dauerplastische Massen dar. Sie können als Kitte zum Ausfüllen von Kabeldurchführungen sowie zum Füllen von Fugen oder Hohlräumen verwendet werden. Sie können auch als Füllung für Brandschutzelemente oder -dichtungen eingesetzt werden, seien es Türen, Wände, Schläuche oder Stoßfugen. Man kann die Massen auf ggf. vorbeschichtete Textilien oder Folien aufbringen bzw. zwischen Textilien, Armierungsbändern oder Folien einlagern und so bei Brandbeanspruchung schützende und isolierende Kleidung, Vorhänge, Matten oder sonstige Schutzvorrichtungen herstellen, die flexibel sind. Das Einfüllen der erfindungsgemäßen Massen in Schläuche oder Hohlprofile, z.B. aus Polyäthylen, führt zu schützenden Dichtungselementen, die im Brandfall aufschäumen, das Verpressen bei Temperaturen zwischen 120°C und 170°C zu blähfähigen Formteilen. Die Verwendung von Hohlperlen aus Alumosilikaten führt zu Formmassen mit verbesserter Hitzestandfestigkeit. Auch kann man durch Aufschäumen der erfindungsgemäßen Massen bei Temperaturen über 180°C, ggf. in dampfdurchlässigen Formen zu Schaumformkörpern mit erheblicher Feuerbeständigkeit kommen. Andererseits können elektrische Kabel oder Schalter und sonstige Geräte durch Einbetten oder auch

Le A 19 091

in sonstigem Kontakt mit den erfindungsgemäßen
Massen geschützt werden.

In den nachfolgenden Beispielen aufgeführte Teile und
Gewichtsteile; Prozentangaben erfolgen als Gewichtsprozente.

- 12 -

Beispiel 1

33 Teile Dicyandiamid, 33 Teile Saccharose und 33 Teile Ammoniumpolyphosphat werden mit 9 Teilen Wasser im Autoklaven 25 h bei 120°C gerührt. Es entsteht ein rotbrauner Teig, der sich beim Stehen bei 21°C und 30 % rel. Luftfeuchtigkeit nicht verfestigt.

Eine aus diesem Teig geformte Kugel von ca. 2 cm² verformt sich beim Lagern, fließt und verliert ihre Kugelgestalt. Wenn man auf ein Eisenblech eine Teigschicht mit ca. 1,5 cm Kantenlänge und 3 mm Höhe aus dem Teig durch Aufdrücken aufklebt, dann das Blech senkrecht stellt und Probeschicht sowie Blech mit der entleuchteten Flamme eines Bunsenbrenners behandelt, tropft das aufgeklebte Material noch vor dem vollständigen Aufschäumen vom Blech ab.

Jetzt verknetet man den Teig mit soviel der im folgenden aufgeführten Füllstoffe, daß jeweils ein nicht oder kaum klebender, gerade noch gut plastisch verformbarer, Teig mit kittartiger Konsistenz entsteht. Die Füllstoffmengen in der Gesamtmischung liegen sämtlich zwischen 10 und 80 Gew.-%.

Füllstoffpulver:                 Füllstoffperlchen:
A: Kaolin                        N: Glasperlenmischung
                                    ⌀ 5-250 Mikron
B: Sand                          0: Flugascheperlchen
                                    ⌀ 5-300 Mikron

Le A 19 091

Füllstoffpulver:                    Füllstoffperlchen:

C: Schlämmkreide                    P: Alumosilikat-Hohl-
D: Talkum                              perlen
E: Schwerspat                          Ø 5-300 Mikron
F: Aluminiumoxid-Hydrat             Spez.Gew. unter 0,7
G: Kieselsäurefüllstoff             Schmelzpunkt ca. 1200°C
H: Portlandzement                   Q:Perlpolymerisat aus ver-
I: Gips                                netztem Polystyrol, Gemisch
J: Bentonit                            Ø 100-350 Mikron
K: Glasmehl                         R:Schaumperlen aus Polystyrol
L: Asbestmehl                          Ø ca. 500-800 Mikron
M: Alumosilikatpulver

Aus den verschiedenen Mischungen wird eine 2 Gramm schwere Kugel geformt und auf einer Aluminiumfolie 30 Minuten in einem auf 250°C beheizten Ofen aufgeschäumt. Zur Auswertung der Versuche wurden Durchmesser und Höhe des gebildeten Schaumballes gemessen und zu einer Bewertungszahl multipliziert. Die jeweils erhaltenen Bewertungszahlen lauten für die einzelnen Füllstoffe:

A: 182        J: 169    Die ausgezeichnete Blähwirkung
B: 523        K: 216    bei kugeligen Füllstoffen im
C: 182        L: 152    Gegensatz zu anderen Füllstoffen
D: 323        M: 246    ist deutlich erkennbar.
E: 285        N: 1890
F: 432        O: 2000
G: 169        P: 2320
H: 143        Q: 1700
I: 156        R: 1550

- 14 -

Beispiel 2:

1 Teil der gemäß Beispiel 1 hergestellten Formmasse
wird   einmal mit 2 Teilen des kugelförmigen Füllstoffs P
aus Beispiel 1, zum anderen mit 2 Teilen in der Kugelmühle gemahlenen, also zerstörten Füllstoffs P zu einem
Teig gemischt. Dann werden aus dem Teig 2 Gramm schwere
Kugeln geformt und in einen auf 250°C vorgeheizten
Schrank gegeben. Nach 30 Minuten wird die Bewertung
gemäß Beispiel 1 vorgenommen:

Probe mit intaktem kugelförmigen Füllstoff P: 2600
Probe mit gemahlenem Füllstoff P:               860

Vergleichbare Ergebnisse werden erhalten, wenn man die
beiden Füllstoffproben mit einer in der Kugelmühle
fein vermahlenen Mischung aus gleichen Teilen Rohrzucker, Ammoniumpolyphosphat und Dicyandiamid analog,
aber in Pulverform vermischt und dann auf 250°C erhitzt.

Beispiel 2 a

Man stellt eine kittartige Masse durch Verkneten von
1 Teil Dicyandiamid, 1 Teil Ammoniumpolyphosphat,
1 Teil Silikathohlperlen P und 2 Teilen Formose-Pentaacetat (hergestellt durch Umsetzung von Formose mit
überschüssigem Essigsäureanhydrid bei 120°C und Abdestillieren überschüssigen Anhydrids und gebildeter
Essigsäure) her.

Le A 19 091

Die Bewertung gemäß Beispiel 1 ergibt eine Bewertungszahl von 1550.

Verwendet man an Stelle des Füllstoffs aus Hohlperlen die gleiche Menge des vermahlenen Füllstoffs, ist die Bewertungszahl nur 520.

## Beispiel 3

In einem Kneter werden 5 Teile Dicyandiamid und 5 Teile Ammoniumpolyphosphat mit 14 Teilen einer durch Formaldehydpolykondensation an basischen Katalysatoren (Calciumhydroxid, Bleihydroxid) hergestellten Formose (mittleres Molekulargewicht etwa 150, etwa 5 OH-Gruppen pro Molekül, technisches Gemisch, ungereinigt) mit einem Wassergehalt von ca. 5 % und zähflüssiger Konsistenz gut vermischt.

Dann setzt man auf dem Kneter 10 Teile des in Beispiel 2 verwendeten aus Hohlperlchen bestehenden Füllstoffs P hinzu und verknetet gut. Man erhält einen plastischen Kitt. Nach Prüfung gemäß Beispiel 1 hat der Kitt eine Bewertungszahl von 2100. Aus dem Kitt wird ein Zylinder mit 1 cm$^\emptyset$ und 4 cm Höhe hergestellt und auf einer Glasplatte senkrecht aufgestellt. Beim Stehen in einem nicht klimatisierten Arbeitsraum zeigt der Zylinder keine Formveränderung, d.h. kein Fließen oder Tropfen, während mehr als 6 Monaten.

Die Annäherung einer Flamme an das Material führt zu einem kräftigen Aufschäumen; der entstandene Schaum glüht

Le A 19 091

in der Flamme, wird aber nicht zerstört. In einen
Betonstein wird ein Loch von 3 cm Durchmesser gebohrt.
Durch das Loch wird ein Polyethylenschlauch mit einem
Durchmesser von 0,6 cm gelegt und dann das Loch mit
einem 3 cm starken Materialpfropfen verschlossen, in
dessen Mitte sich der Schlauch befindet. Dann behandelt
man nach 10 Tagen die simulierte Kabeldurchführung
mit einer Bunsenflamme. Es zeigt sich folgendes Bild:
Der Schlauch brennt bzw. schmilzt sofort weg; der
Materialpfropf aus dem hergestellten Kitt schäumt oberflächlich auf und verschließt den Schlaucheintritt
und die Oberseite des 3 cm-Loches. Nach 10 Minuten
ist die Rückseite des Kittpfropfens noch kälter als
40°C.

Folgende Anwendung soll die Wirkungsweise der erfindungsgemäß hergestellten Kittmassen erläutern bzw.
deren Schutzfunktion im Brandfalle.

In einen Betonstein wird ein 3 cm ∅-Loch gebohrt
(Länge 7 cm), das Loch wird mit einer Wandauskleidung mit dem hergestellten Kittmaterial von 5 mm
Stärke versehen. Dann wird der Stein mit dem ausgekleideten Loch so über einem Bunsenbrenner angebracht,
daß das Loch einen Kamin für die Brandgase der Flamme
bildet. Die Flamme endet einen Zentimeter innerhalb
des Loches. Innerhalb einer Minute nach Beginn der Beflammung hat sich das Loch mit einer aufgeschäumten
Masse verschlossen.

Le A 19 091

- 17 -

Die beiden geschilderten Versuche an einem Betonsteinloch werden mit analogen Ergebnisse abgeschlossen, wenn man die der Atmosphäre zugekehrte
Seite der eingebrachten Kittmaße mit einem handelsüblichen Bitumenlack als Schutzschicht versieht.

Beispiel 4

Ein Gemisch aus 10 Teilen einer in der Kugelmühle
fein vermahlenen Mischung aus 10 Teilen Dicyandiamid,
15 Teilen Ammoniumpolyphosphat, 15 Teilen Sacharose
und 20 Teilen des Füllstoffs P gemäß Beispiel 1 wird
als 3 mm dicke Schicht in einer Presse bei 150°C
und 5 bar verpreßt. Hierbei bildet sich eine braune
Platte, die zu einem Granulat gebrochen wird. Dieses
Granulat wird in eine zylindrische Form aus feinem
Maschendraht (Fliegendraht) eingefüllt, so daß die
Schüttung etwa 30 % des Innenraumes einnimmt. Dann wird
die Form unter langsamem Rotieren mit einem Heißluftstrom von ca. 300°C durchströmt. Hierbei schäumt
das Material auf und füllt die Form innerhalb einer
Minute aus. Es hat sich ein zylindrischer Schaumstoffkörper gebildet. Aus dem Schaumstoffzylinder werden
Rohrhalbschalen für Isolationszwecke geschnitten.

Le A 19 091

Beispiel 5

In einem Kneter werden folgende Komponenten zu einer kittartigen Masse gut verknetet:

14  Teile Melasse, Wassergehalt ca. 8 %
 3  Teile Monoammoniumphosphat
 8  Teile Dicyandiamid
11  Teile Füllstoff P gemäß Beispiel 1

Diese Masse hat eine unter Normalbedingungen dauerplastische Konsistenz.

Eine 2 Gramm schwere Kugel aus dem Kitt wird gemäß Beispiel 1 getestet und ergibt eine Bewertungszahl von 1400. Nach 6-monatigem Lagern bei Raumtemperatur und Raumklima wird eine Bewertungszahl von 1480 gefunden.

Aus zwei Asbestzementplatten wird eine Prallwand mit einem Schlitz von 5 mm Breite und 6 mm Tiefe hergestellt. Der Schlitz wird mit der Kittmasse glatt ausgefüllt und verstrichen. Dann wird die Flamme eines Bunsenbrenners auf den Schlitz gerichtet. Die Kittmasse tropft nicht aus dem Schlitz heraus, vielmehr bildet sich eine voluminöse Aufblähung, die den Schlitz bedeckt und den Flammenzutritt verhindert. Nach 10 Minuten hat der Kitt auf der der Flamme abgewendeten Seite des Schlitzes eine Temperatur unter 70°C. Nach 30 Minuten ist die Flamme noch nicht durch den Schlitz gedrungen.

Le A 19 091

Beispiel 6

Es wird wie bei Beispiel 5 gearbeitet, nur an Stelle
des Monoammoniumphosphates nunmehr Diammoniumphosphat
sowie an Stelle von Melasse Formose mit 8 % Wassergehalt, verwendet. Bei der Prüfung analog Beispiel 1
wird eine Bewertungszahl von 1160 erhalten.

Le A 19 091

- 20 -

Patentansprüche

1) Flammwidrige schäumbare Formmassen auf der Basis von Intumeszenzmitteln mit einem Gehalt an Füllstoffen, dadurch gekennzeichnet, daß die Füllstoffe kugelige oder nahezu kugelige Teilchen sind.

2) Formmassen nach Anspruch 1 bestehend aus
5 - 70, vorzugsweise 10 - 50, Gew.-% Karbonific,
5 - 70, vorzugsweise 10 - 50, Gew.-% Katalysator,
5 - 70, vorzugsweise 10 - 50, Gew.-% Treibmittel und
1 - 80, vorzugsweise 20 - 70, Gew.-% kugeliger oder
nahezu kugeliger Füllstoffe,
wobei sich die Prozentangaben auf die Summe der vier genannten Komponenten beziehen.

3) Formmassen nach Ansprüchen 1 und 2, dadurch gekennzeichnet, daß als Füllstoffe - insbesondere anorganische - Hohlperlen verwendet werden.

4) Formmassen nach Ansprüchen 1 - 3, dadurch gekennzeichnet, daß als Karbonific nicht kristallisierende zuckerähnliche Substanzen, insbesondere Formosen, deren Ester oder Melasse, verwendet werden.

5) Formmassen nach Ansprüchen 1 - 4, dadurch gekennzeichnet, daß als "Katalysator" Mono- bzw. Diammoniumphosphat verwendet wird.

6) Formmassen nach Ansprüchen 1 - 5, dadurch gekennzeichnet, daß als Treibmittel Dicyandiamid verwendet wird.

Le A 19 091

- 21 -

7) Verfahren zur Herstellung der Formmassen nach Ansprüchen 1 - 6, dadurch gekennzeichnet, daß man Intumeszenzmittel und Füllstoffe sowie ggf. weitere Hilfsmittel miteinander mischt.

8) Verwendung der Formmassen nach Ansprüchen 1 - 6 als Kitte, Füllmassen oder Überzugsmittel.

9) Verwendung der Formmassen nach Ansprüchen 1 - 6 zur Herstellung geschäumter Formkörper.

<u>Le A 19 091</u>

0010714

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | US - A - 2 632 742 (L.W. ECKERT)  * Spalte 1, Zeilen 35-42; Spalte 2, Zeilen 1-40; Spalte 3, Zeilen 34-73; Spalte 4, Zeilen 10-17; Ansprüche 1-4,14 * | 1,2,5-8 |
| | -- | |
| | US - A - 3 733 289 (A.J. BURNS)  * Spalte 1, Zeilen 14-17; Spalte 3, Zeilen 39-75; Spalte 4, Zeilen 1-20; Spalte 6, Zeilen 11-71; Anspruch 1 * | 1,2,4,5,8 |
| | -- | |
| | DE - A - 2 704 897 (HOECHST)  * Seite 3, Zeilen 11-26; Seite 5, Zeilen 15-27; Seite 6, Zeilen 15-27; Seite 7, Zeilen 7-9; Beispiele * | 1,2,4,6-8 |
| | -- | |
| | FR - A - 2 315 489 (ISHIKAWA)  * Seite 2, Zeilen 4-19; Seite 10, Zeilen 28-36; Seite 11, Zeilen 9-31; Ansprüche 1-15 * | 1,3 |
| | -- | |
| A | US - A - 3 955 987 (J.L. SCHAAR)  * Ansprüche 1-8 * | 1,2,4,5 |
| | ---- | |

**KLASSIFIKATION DER ANMELDUNG (Int.Cl. 3)**

C 09 K 3/28
C 09 D 5/18
C 08 J 9/00

**RECHERCHIERTE SACHGEBIETE (Int. Cl. 3)**

C 09 K 3/28
C 09 D 5/18
C 08 D 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-12-1979 | BOULON |